**Europäisches Patentamt**

**European Patent Office**

**Office européen des brevets**

(19)

(11) Numéro de publication : **0 485 276 A1**

# (12) DEMANDE DE BREVET EUROPEEN

(21) Numéro de dépôt : **91402962.4**

(22) Date de dépôt : **05.11.91**

(51) Int. Cl.$^5$ : **G02B 6/28**

(30) Priorité : **05.11.90 FR 9013663**

(43) Date de publication de la demande :
**13.05.92 Bulletin 92/20**

(84) Etats contractants désignés :
**DE GB IT NL**

(71) Demandeur : **PHOTONETICS**
**52 Avenue de l'Europe**
**F-78160 Marly le Roi (FR)**

(72) Inventeur : **Martin, Philippe**
**5 Clos Blaise Cendrars**
**F-78760 Ponchartrain (FR)**
Inventeur : **Simonpietri, Pascal**
**2 Allée des Renardeaux**
**F-95350 Saint Brice sous Forêt (FR)**
Inventeur : **Lefèvre, Hervé**
**19, rue des Cordelières**
**F-75013 Paris (FR)**

(74) Mandataire : **Michelet, Alain et al**
**Cabinet Harlé et Phelip 21 rue de la**
**Rochefoucauld**
**F-75009 Paris (FR)**

(54) **Multiplexeur en longueur d'onde.**

(57)     L'invention concerne une multiplexeur en longueur d'onde, à guides d'onde optiques par couplage d'ondes évanescentes. Il comporte un premier guide optique (2a) monomode à la longueur d'onde $\lambda_1$ et un deuxième guide optique (2b) guidant l'onde d'entrée de longueur d'onde $\lambda_2$.

Ces guides ont un coeur et une gaine optique et convergent dans une zone d'interaction. Les coeurs des premier et deuxième guides étant à proximité l'un de l'autre, définissent une longueur d'interaction et des longueurs de couplage pour chaque longueur d'onde $\lambda_1$, $\lambda_2$.

Selon l'invention $\lambda_1$ est supérieur à $\lambda_2$ et la longueur d'interaction est égale à la longueur de couplage pour $\lambda_1$.

FIG.1

EP 0 485 276 A1

L'invention concerne un multiplexeur en longueur d'onde.

Le développement des fibres optiques, de l'optique intégrée, et de leurs applications dans le domaine de la transmission de données ou de la mesure rend nécessaire la conception et la mise au point de composants remplissant dans ces systèmes optiques les fonctions des composants optiques traditionnels.

Ainsi des multiplexeurs en longueur d'onde à fibre optique ont déjà été proposés. Ils permettent par exemple la transmission simultanée de différentes informations dans une même fibre.

Les demandes de brevet européen EP-0079.196 et EP-103.382 décrivent un tel multiplexeur réalisé avec deux fibres optiques monomodes.

Selon la technique décrite dans ces documents les coeurs des fibres sont placés à proximité l'un de l'autre dans une zone dite zone d'interaction.

A cet effet une partie de la gaine optique de chacune de ces fibres est enlevée et chaque fibre est placée dans un bloc qui lui donne sa forme dans la zone d'interaction. La position relative des blocs détermine la position relative des coeurs.

Dans la zone d'interaction est définie une longueur d'interaction qui dépend de l'épaisseur de la gaine optique de chaque fibre qui a été enlevée, des courbures respectives de chacune des fibres dans la zone d'interaction et de leur position relative.

Des ondes optiques de longueur d'onde respective $\lambda_1$ et $\lambda_2$ sont couplées dans les premières et deuxièmes fibres.

Pour un coupleur donné, il est également défini une longueur de couplage pour chaque longueur d'onde $\lambda_1$ et $\lambda_2$.

Dans la zone d'interaction se produit un couplage de chaque onde, par onde évanescente qui engendre le passage de l'énergie lumineuse dans l'une ou l'autre fibre selon les valeurs relatives de la longueur de couplage par rapport à la longueur d'interaction.

La quantité relative d'énergie couplée dans chacune des fibres pour chaque longueur d'onde dépend des valeurs relatives, de la longueur d'interaction L, de la longueur de couplage $L_1$ à $\lambda_1$ et de la longueur de couplage $L_2$ à $\lambda_2$.

Selon le document cité plus haut il est proposé pour réaliser un multiplexeur, de fixer la longueur d'interaction à une valeur égale à un multiple pair de la longueur de couplage pour une des longueurs d'onde $\lambda_1$ par exemple et à un multiple impair de la longueur d'interaction l'autre longueur d'onde par exemple $\lambda_2$. Ainsi l'onde à la longueur d'onde $\lambda_1$ est maintenue dans sa fibre d'entrée et l'onde à la longueur d'onde $\lambda_2$ est transférée de sa fibre d'entrée à l'autre fibre.

Cette technique est performante et a permis de résoudre de nombreux problèmes. Toutefois il est apparu qu'elle est mal adaptée à des situations dans lesquelles les longueurs d'onde $\lambda_1$ et $\lambda_2$ concernées sont très différentes ou lorsqu'il est nécessaire de réaliser un dispositif de multiplexage alors que l'une au moins des fibres optiques n'est pas monomode.

Par ailleurs le brevet US-A-4, 963, 832 décrit un dispositif de couplage pour amplificateur à fibre optique dopées à l'Erbium. Un coupleur dichroïque permet d'éviter le couplage de signal de pompe vers la fibre de transmision.

Le but de la présente invention est la réalisation d'un multiplexeur en longueur d'onde utilisable pour le couplage d'onde à des longueurs d'onde très différentes et supportant, que, à l'entrée les guides ne soient pas monomodes pour la longueur d'onde la plus faible.

A cet effet l'invention concerne un multiplexeur en longueur d'onde, à guides d'onde optiques par couplage d'ondes évanescentes, de deux ondes optiques d'entrée de longueur d'onde respectives $\lambda_1$ et $\lambda_2$ comportant un premier guide optique monomode à la longueur d'onde $\lambda_1$ et un deuxième guide optique guidant l'onde d'entrée de longueur d'onde $\lambda_2$ les premier et deuxième guides ayant un coeur et une gaine optique et convergeant dans une zone d'interaction, les coeurs des premier et deuxième guides étant à proximité l'un de l'autre et définissant une longueur d'interaction et des longueurs de couplage pour chaque longueur d'onde $\lambda_1$, $\lambda_2$.

Selon l'invention $\lambda_1$ est supérieur à $\lambda_2$ et la longueur d'interaction est égale à la longueur de couplage pour $\lambda_1$.

Dans un mode de réalisation préféré les guides optiques sont des fibres.

Elles sont avantageusement biréfringentes ; selon un autre mode de réalisation l'une des fibres est dopée, l'onde à la longueur d'onde $\lambda_1$ est porteuse d'un signal et l'onde à la longueur d'onde $\lambda_2$ est une onde de pompe.

L'invention sera décrite plus en détail dans la description qui va suivre en références aux dessins dans lesquels :

La figure 1 est une représentation schématique du multiplexeur selon l'invention.

La figure 2 est une représentation du taux de couplage proposé selon une technique de l'art antérieur.

La figure 3 est une représentation du taux de couplage de chacune des ondes en fonction de la longueur d'interaction.

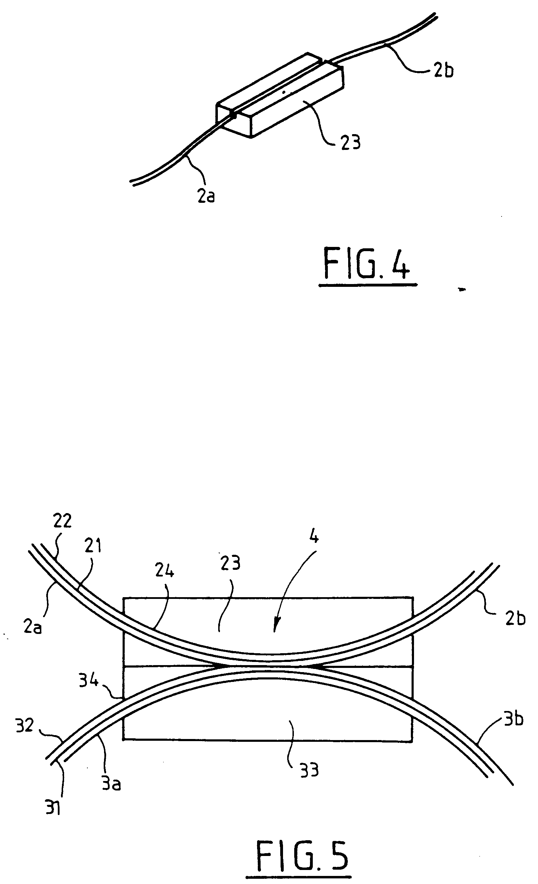

La figure 4 est la représentation d'une fibre positionnée dans son bloc support.

La figure 5 est la représentation d'un multiplexeur selon l'invention réalisé avec des blocs supports.

Le multiplexeur 1 de l'invention peut être un composant à fibres ou un composant d'optique intégrée réalisé par exemple sur un substrat en verre ou en niobate de lithium ou avec des guides de silice sur substrat silicium.

Dans la description d'un mode de réalisation particulier qui suit, le dispositif de l'invention est un multiplexeur 1 comportant deux fibres optiques 2, 3 référencé 2a et 3a à l'entrée, 2b et 3b à la sortie.

A l'entrée une onde lumineuse de longueur d'onde $\lambda_1$ est couplée dans la fibre 2a et une onde optique de longueur d'onde $\lambda_2$ est couplée dans la fibre 3a. A la sortie les deux ondes de longueurs d'onde respectives $\lambda_1$ et $\lambda_2$ ou au moins l'essentiel de l'énergie de ces deux ondes sont couplées à la fibre 3b.

Les fibres 2 et 3 comportent chacune un coeur respectivement référencé 21 et 31 et une gaine optique référencée respectivement 22 et 32. De plus leur protection mécanique est généralement assurée par une gaine extérieure que nous ne considérerons pas ici et qui n'est pas représentée sur les figures.

Les fibres 2 et 3 sont façonnées et maintenues de telle sorte que dans la zone d'interaction 4 leurs coeurs respectifs 21 et 31 soient suffisamment rapprochés l'un de l'autre pour qu'un couplage par onde évanescente des ondes lumineuses couplées à chacune des fibres, vers l'autre se produise.

Différentes méthodes permettent d'obtenir et de contrôler le rapprochement des coeurs 21 et 31, ce sont celles qui sont connues et utilisées de manière générale dans la fabrication des coupleurs à fibre optique.

En particulier ce rapprochement peut être obtenu par soudure par fusion et étirage. Il peut également être obtenu par enlèvement partiel des gaines optiques 22 et 32, maintien des fibres en position dans des blocs 23 et 33 puis rapprochement de ces blocs. Nous limiterons la description qui va suivre à ce dernier mode de réalisation.

Les blocs 23 et 33 sont réalisés dans un matériau dont les propriétés géométriques sont stables telles que la silice.

Dans chacun de ces blocs une rainure 24, 34 est formée dont la section a une forme et une dimension telle qu'elle permet de positionner les fibres 21 et 31 avec précision dans cette rainure.

La section de cette rainure peut avoir une forme de - U - ou une forme de - V -.

Chacune de ces rainures a son axe central contenu dans un plan et une profondeur plus importante aux extrémités du bloc que dans la partie centrale. Ainsi les fibres 21 et 31 placées dans ces rainures 24 et 34 sont proches l'une de l'autre au voisinage des centres des blocs 21, 23 et 33.

La profondeur des rainures 24, 34 définit la courbure des fibres dans la zone d'interaction.

Plus précisément dans la zone d'interaction 4 les fibres 2 et 3 dont une partie de la gaine optique 22, 32 a été enlevée affleure à la surface des blocs 23 et 33. Cet enlèvement est réalisé par polissage latéral.

Ainsi la mise en contact des blocs 23 et 33 engendre la mise en contact des fibres, par leurs gaines et définit une zone d'interaction.

La longueur d'interaction dans la zone d'interaction 4 est définie par la distance h des coeurs 21 et 31 des fibres, par les rayons de courbure R1 et R2 des fibres dans cette zone (on choisira en général R2 = R1 = R) et par le décalage latéral d qu'il est possible de faire varier en faisant glisser les blocs 23 et 33 relativement l'un par rapport à l'autre.

Un tel dispositif produit le couplage des ondes d'entrée par onde évanescente. Plus précisément l'énergie lumineuse contenue dans l'onde lumineuse, couplée à l'entrée à l'une des fibres optiques est transférée, plus ou moins complètement dans l'autre fibre.

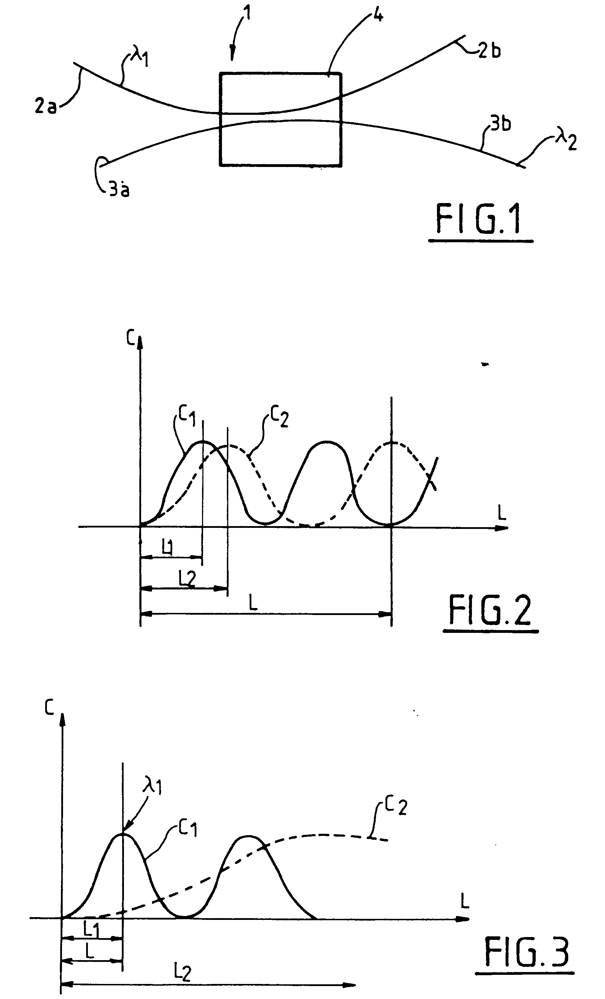

Le taux de transfert représenté à la figure 2 est fonction de la longueur d'interaction des fibres l'une par rapport à l'autre.

Cette longueur d'interaction L est fonction des paramètres géométriques du système c'est-à-dire de la distance h des fibres, du décalage d et des rayons de courbure R1 et R2.

Le taux de couplage c est défini comme étant le rapport en énergie entre le flux sortant par la fibre optique différente de la fibre d'entrée sur le flux couplé dans la fibre d'entrée.

Ce taux c varie sinusoïdalement en fonction de la longueur d'interaction L. On appelle longueur de couplage la longueur interaction $L_1$ la plus petite pour laquelle le taux de couplage c est maximum.

Dans le système décrit plus haut le taux de couplage de l'onde à la longueur d'onde $\lambda_1$ est c1 et le taux de couplage de l'onde à la longueur $\lambda_2$ est c2.

Lorsque, selon l'art antérieur, telles que représentées sur la figure 2 les longueurs d'onde $\lambda_1$ et $\lambda_2$ sont relativement proches, et que les deux fibres 2 et 3 sont monomodes, les longueurs de couplage $L_1$ et $L_2$ sont proches l'une de l'autre et il a été proposé de réaliser un multiplexeur en choisissant une longueur d'interaction L qui soit un multiple pair de $L_1$ et un multiple impair de $L_2$.

Ainsi l'énergie de l'onde lumineuse à la longueur d'onde $\lambda_1$ est maintenue dans la fibre d'entrée c'est-à-dire dans la première fibre alors que l'énergie lumineuse de l'onde à la longueur d'onde $\lambda_2$ est transférée de la fibre d'entrée (la deuxième fibre) vers l'autre fibre (la première).

Selon l'invention, telle que représentée sur la figure 3 lorsque les longueurs d'onde $\lambda_1$ et $\lambda_2$ sont très différentes et que l'une des fibres n'est pas monomode la condition mentionnée plus haut est difficile à satisfaire.

Par contre il a été trouvé de manière surprenante que pour une valeur L de la longueur d'interaction égale à la longueur de couplage $L_1$ de la plus grande longueur d'onde $\lambda_1$ l'ensemble du flux à cette longueur d'onde $\lambda_1$ est couplé alors que l'essentiel du flux à la longueur d'onde $\lambda_2$ inférieure, reste dans sa fibre.

Cette détermination de la longueur d'interaction peut être réalisée avec une certaine incertitude et les réglages qui sont nécessaires sont donc relativement simples et une bonne qualité du multiplexage peut raisonnablement être obtenue.

L'optimisation de la longueur d'interaction est réalisée par déplacement relatif des blocs 23 et 33 par l'intermédiaire de mouvement mécanique de précision et en observant l'intensité des flux sortants par les fibres 2b et 3b.

De préférence l'enlèvement d'une partie de la gaine optique des fibres 2 et 3 est réalisée après positionnement de la fibre dans le bloc par polissage de l'ensemble.

Après l'optimisation de la longueur d'interaction L les blocs 23 et 33 sont préférentiellement fixés l'un par rapport à l'autre par collage.

Dans un autre mode de réalisation un liquide d'indice est interposé entre les blocs 23 et 33 de manière à améliorer le couplage.

Dans un mode de réalisation préféré le multiplexeur de l'invention est utilisé pour amplifier un signal lumineux porté par la première onde optique à la longueur d'onde $\lambda_1$.

A cet effet la première fibre spécialement dopée avec des terres rares est monomode à la longueur d'onde $\lambda_1$.

L'onde à la longueur d'onde $\lambda_2$ est appelée onde de pompe. Elle a une longueur d'onde $\lambda_2$ généralement notablement inférieure à la longueur d'onde $\lambda_1$, de préférence $\lambda_1$ est supérieur ou égal à 1,5 $\lambda_2$.

A titre d'exemple pour une onde $\lambda_1$ à la longueur d'onde 1,55 $\mu$m il peut être utilisé une onde de pompe de longueur d'onde égale à 0,532 $\mu$m, 0,820 $\mu$m ou 0,980 $\mu$m.

Dans un mode de réalisation préférée les fibres optiques 2 et 3 sont des fibres biréfringentes.

De bons résultats sont obtenus lorsque les fibres 2 et 3 sont identiques c'est-à-dire que la deuxième fibre 3 est monomode à la longueur d'onde $\lambda_1$.

## Revendications

1. Multiplexeur en longueur d'onde, à guides d'onde optiques par couplage d'ondes évanescentes, de deux ondes optiques d'entée de longueur d'onde respectives $\lambda_1$, et $\lambda_2$ comportant un premier guide optique (2a) monomode à la longueur d'onde $\lambda_1$ et un deuxième guide optique (2b) guidant l'onde d'entrée de longueur d'onde $\lambda_2$ les premier et deuxième guides ayant un coeur et une gaine optique et convergent dans une zone d'intéraction, les coeurs des premier et deuxième guides étant à proximité l'un de l'autre et définissant une longueur d'intéraction et des longueurs de couplage pour chaque longueur d'onde $\lambda_1$, $\lambda_2$ caractérisé en ce que :

   $\lambda_1$ est supérieur à $\lambda_2$ et la longueur d'intéraction est égale à la longueur de couplage pour

$\lambda_1$.

2. Multiplexeur en longueur d'onde selon la revendication 1 caractérisé en ce que les guides optiques (2a, 2b) sont des fibres.

3. Multiplexeur en longueur d'onde selon la revendication 2 caractérisé en ce que la zone d'intéraction est réalisée par polissage latéral des fibres (2a, 2b), la gaine (22), (32) de chaque fibre étant partiellement enlevée dans ladite zone d'intéraction et lesdites gaines étant mises en contact.

4. Multiplexeur en longueur d'onde selon l'une quelconque des revendications 2 et 3 caractérisé en ce qu'il comporte deux blocs chacun porteur de l'une des fibres optiques dans la zone d'intéraction, chacun desdits blocs comportant une rainure dans laquelle la fibre optique correspondante est fixée, la profondeur de ces rainures définissant la courbure des fibres dans la zone d'interaction, la position relative des blocs déterminant la position relative des coeurs des fibres dans la zone d'intéraction.

5. Multiplexeur en longueur d'onde selon la revendication 2 caractérisé en ce que la zone d'intéraction est réalisée par fusion-étirage.

6. Multiplexeur en longueur d'onde selon l'une quelconque des revendications 1 à 5 caractérisé en ce que les fibres optiques sont biréfringentes.

7. Multiplexeur en longueur d'onde selon la revendication 1 caractérisé en ce qu'il constitue un composant d'optique intégrée, les guides d'ondes étant réalisés sur un substrat.

8. Multiplexeur en longueur d'onde selon l'une quelconque des revendications 1 à 7 caractérisé en ce que l'onde à la longueur d'onde $\lambda_1$ est porteuse d'un signal et que l'onde à la longueur d'onde $\lambda_2$ est une onde de pompe.

9. Multiplexeur en longueur d'onde selon l'une quelconque des revendications 1 à 8 caractérisé en ce que :

   $\lambda_1 = 1,55$ $\mu$m et $\lambda_2 < 1$ $\mu$m.

FIG.1

FIG.2

FIG.3

5

## FIG. 4

## FIG. 5

Numero de la demande

EP    91 40 2962

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y,D<br>A | EP-A-0 103 382 (STANFORD UNIVERSITY)<br>* abrégé *<br>* page 12, ligne 7 - ligne 20 *<br>* page 15, ligne 31 - ligne 34 *<br>* page 18, ligne 17 - page 20, ligne 36 *<br>* figures 1-4,11 *<br>--- | 1-4,8<br>9 | G02B6/28 |
| Y<br>A | US-A-4 963 832 (DESURVIRE)<br>* abrégé *<br>* colonne 2, ligne 53 - colonne 3, ligne 41 *<br>* colonne 4, ligne 40 - ligne 50 *<br>* figure 4 *<br>--- | 1-4,8<br>9 | |
| A | US-A-4 834 481 (LAWSON)<br>* abrégé *<br>* colonne 4, ligne 23 - ligne 60 *<br>* figures 1,2C,5A *<br>--- | 1,2,5 | |
| A | ELECTRONICS LETTERS.<br>vol. 21, no. 10, Mai 1985, STEVENAGE GB<br>pages 415 - 416;<br>J. YOKOHAMA ET AL.: 'Fibre-optic polarising beam splitter employing birefringent-fibre coupler'<br>* tout le document *<br>--- | 1,2,5,6 | DOMAINES TECHNIQUES RECHERCHES (Int. Cl.5 )<br><br>G02B |
| A | EP-A-0 322 744 (HITACHI)<br>* abrégé *<br>* colonne 3, ligne 35 - colonne 4, ligne 49 *<br>* figures 10A,10B *<br><br>----- | 1,7 | |

Le présent rapport a été établi pour toutes les revendications

| Lieu de la recherche | Date d'achèvement de la recherche | Examinateur |
|---|---|---|
| LA HAYE | 07 FEVRIER 1992 | LUCK W.S. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 01.82 (P0402)

7